(19) Europäisches Patentamt
European Patent Office
Office européen des brevets

(11) **EP 2 650 713 A1**

(12) **EUROPÄISCHE PATENTANMELDUNG**

(43) Veröffentlichungstag:
**16.10.2013 Patentblatt 2013/42**

(51) Int Cl.:
**G02B 21/02** (2006.01)    **G02B 21/33** (2006.01)
**G02B 27/00** (2006.01)

(21) Anmeldenummer: **13001727.0**

(22) Anmeldetag: **04.04.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.04.2012 DE 102012007359**

(71) Anmelder: **Carl Zeiss Microscopy GmbH 07745 Jena (DE)**

(72) Erfinder:
• **Shi, Renhu 37085 Göttingen (DE)**

• **Kleinschmidt, Werner 37139 Adelebsen (DE)**
• **Herbst, Georg 37085 Göttingen (DE)**
• **Richter, Holger 37249 Neu-Eichenberg (DE)**
• **Hoyer, Carsten 37127 Jühnde (DE)**

(74) Vertreter: **Schiffer, Axel Martin et al Weber & Heim Patentanwälte Irmgardstrasse 3 81479 München (DE)**

(54) **Immersionsobjektiv und Lichtmikroskop**

(57) Die Erfindung betrifft ein Immersionsobjektiv für ein Lichtmikroskop mit einer ersten Linsengruppe, die an einer zu einem Messobjekt zeigenden Seite des Objektivs angeordnet ist und insbesondere eine erste und eine zweite Linse umfasst, mit einer dritten Linse, die hinter der ersten Linsengruppe angeordnet ist, wobei ein erster Luftabstand zwischen der ersten Linsengruppe und der dritten Linse gebildet ist, mit einer zweiten Linsengruppe, die hinter der dritten Linse angeordnet ist und insbesondere eine vierte, fünfte und sechste Linse umfasst, wobei ein zweiter Luftabstand zwischen der dritten Linse und der zweiten Linsengruppe gebildet ist, und mit einer dritten Linsengruppe, die hinter der zweiten Linsengruppe angeordnet ist und insbesondere eine siebte, achte und neunte Linse umfasst. Das Immersionsobjektiv ist erfindungsgemäß dadurch gekennzeichnet, dass hinter der dritten Linsengruppe eine zehnte, elfte und zwölfte Linse vorhanden sind, dass zur Korrektur von Abbildungsfehlern zwischen der dritten Linsengruppe und der zehnten Linse ein vierter Luftabstand gebildet ist, zwischen der zehnten Linse und der elften Linse ein fünfter Luftabstand gebildet ist und zwischen der elften Linse und der zwölften Linse ein sechster Luftabstand gebildet ist und dass zum Anpassen von optischen Eigenschaften des Objektivs an ein Immersionsmedium eine Stelleinrichtung zum Verändern von mindestens dem ersten, zweiten und fünften Luftabstand vorhanden ist. Außerdem betrifft die Erfindung ein Lichtmikroskop mit einem Immersionsobjektiv.

Fig. 1

EP 2 650 713 A1

**Beschreibung**

Die vorliegende Erfindung bezieht sich in einem ersten Aspekt auf ein Immersionsobjektiv für ein Lichtmikroskop nach dem Oberbegriff des Anspruchs 1. In einem zweiten Aspekt betrifft die Erfindung ein Lichtmikroskop nach dem Oberbegriff des Anspruchs 21.

Ein gattungsgemäßes Immersionsobjektiv für ein Lichtmikroskop weist folgende Komponenten auf: Eine erste Linsengruppe, die an einer zu einem Messobjekt zeigenden Seite des Objektivs angeordnet ist und insbesondere eine erste und eine zweite Linse umfasst, eine dritte Linse, die hinter der ersten Linsengruppe angeordnet ist, wobei ein erster Luftabstand zwischen der ersten Linsengruppe und der dritten Linse gebildet ist, eine zweite Linsengruppe, die hinter der dritten Linse angeordnet ist und insbesondere eine vierte, fünfte und sechste Linse umfasst, wobei ein zweiter Luftabstand zwischen der dritten Linse und der zweiten Linsengruppe gebildet ist, und eine dritte Linsengruppe, die hinter der zweiten Linsengruppe angeordnet ist und insbesondere eine siebte, achte und neunte Linse umfasst.

Ein gattungsgemäßes Lichtmikroskop weist ein oben beschriebenes Immersionsobjektiv auf.

Gattungsgemäße Objektive sind beispielsweise aus DE 10 2008 006 826 A1 und aus DE 10 2006 052 142 A1 bekannt. Solche Objektive werden zum Beispiel in Laser- Scanning- Mikroskopen verwendet. Mit diesen können dreidimensionale Strukturen von lebenden Zellen beobachtet werden, welche sich in der Regel in einer Flüssigkeit unter einem Deckglas befinden. Zur dreidimensionalen Beobachtung wird angestrebt, dass die Brechzahlen der Medien auf beiden Seiten des Deckglases möglichst gleich sind. In diesem Fall können besonders scharfe Abbildungen der Probe in  verschiedenen Schichttiefen, also unterschiedlichen Entfernungen entlang einer optischen Achse des Objektivs, erzeugt werden. Damit das Objektiv für verschiedene Immersionsmedien, insbesondere für Wasser, Glycerin oder Öl, geeignet ist, sind bei dem Objektiv aus DE 10 2006 052 142 A1 der erste und der zweite Luftabstand einstellbar. Solche Objektive werden auch als Multi- Immersions- KORR- Objektive bezeichnet.

Eine grundlegende Anforderung bei Immersionsobjektiven ist, eine hohe numerische Apertur NA, beispielsweise von $1,05 < NA < 1,2$, bereitzustellen. Zudem soll der Arbeitsabstand, das heißt der Abstand vom Objektiv zu einer Probe, groß sein, beispielsweise größer als 0,5 mm bei einer Deckglasdicke von 0,17 mm. Dadurch wird die Handhabung der Präparate oder Proben einfacher.

Für einen bestmöglichen Bildkontrast ist weiterhin eine planapochromatische Korrektur erwünscht.

Prinzipiell ist bekannt, zu diesen Zwecken variable Lufträume, zusätzliche Linsen, Kittglieder aus mehreren zusammengekitteten Linsen oder besonders dicke Linsen zu verwenden. Dies führt allerdings zu einer unerwünschten größeren Baulänge in Richtung der optischen Achse des Objektivs. Für viele Mikroskope oder Anwendungen ist aber eine maximal zulässige Baulänge, beispielsweise 48, 56 mm, vorgeschrieben. Bekannte Multi- Immersions- KORR- Objektive, die solch eine begrenzte Baulänge einhalten, nehmen eine Verschlechterung der Leistung des Objektivs in Kauf. Insbesondere werden Abbildungsfehler nur eingeschränkt korrigiert.

Als eine **Aufgabe** der Erfindung kann daher angesehen werden, ein Immersionsobjektiv anzugeben, das bei kompakter Bauweise verschiedene Abbildungsfehler möglichst effektiv korrigiert. Zudem soll ein Lichtmikroskop mit einem Immersionsobjektiv geschaffen werden, das bei kompakter Bauweise verschiedene Abbildungsfehler effektiv korrigiert.

Diese Aufgabe wird in einem ersten Gesichtspunkt durch das Immersionsobjektiv mit den Merkmalen des Anspruchs 1 gelöst. In einem zweiten Gesichtspunkt wird die Aufgabe durch ein Lichtmikroskop mit einem Immersionsobjektiv mit den Merkmalen des Anspruchs 21 gelöst.

Vorteilhafte Varianten des erfindungsgemäßen Immersionsobjektivs sind Gegenstand der abhängigen Ansprüche und werden außerdem in der folgenden Beschreibung, insbesondere im Zusammenhang mit den Figuren, beschrieben.

Bei dem Immersionsobjektiv der oben genannten Art ist erfindungsgemäß vorgesehen, dass hinter der dritten Linsengruppe eine zehnte, elfte und zwölfte Linse vorhanden sind, dass zur Korrektur von Abbildungsfehlern zwischen der dritten Linsengruppe und der zehnten Linse ein vierter Luftabstand gebildet ist, zwischen der zehnten Linse und der elften Linse ein fünfter Luftabstand gebildet ist und zwischen der elften Linse und der zwölften Linse ein sechster Luftabstand gebildet ist und dass zum Anpassen von optischen Eigenschaften des Objektivs an ein Immersionsmedium eine Stelleinrichtung zum Verändern von mindestens dem ersten, zweiten und fünften Luftabstand vorhanden ist.

Das Lichtmikroskop der vorgenannten Art weist erfindungsgemäß ein Immersionsobjektiv auf, bei dem hinter der dritten Linsengruppe eine zehnte, elfte und zwölfte Linse vorhanden sind, bei dem zur Korrektur von Abbildungsfehlern zwischen der dritten Linsengruppe und der zehnten Linse ein vierter Luftabstand gebildet ist, zwischen der zehnten Linse und der elften Linse ein fünfter Luftabstand gebildet ist und zwischen der elften Linse und der zwölften Linse ein sechster Luftabstand gebildet ist und bei dem zum Anpassen von optischen Eigenschaften des Immersionsobjektivs an ein Immersionsmedium eine Stelleinrichtung zum Verändern von mindestens dem ersten, zweiten und fünften Luftabstand vorhanden ist.

Als ein Kerngedanke der Erfindung kann angesehen werden, zwischen der zweiten Linsengruppe und der hintersten Linse im Objektiv eine vergleichsweise hohe Anzahl von drei Luftabständen vorzusehen. Diese wirken als Luftlinsen und können effektiv Abbildungsfehler, insbesondere eine sphärische Aberration und einen Farblängsfehler, korrigieren.

Als eine weitere wesentliche Idee der Erfindung kann erachtet werden, den fünften Luftabstand mittels einer Stelleinrichtung veränderbar auszuführen, um so die Korrektur der Abbildungsfehler für Immersionsmedien mit verschiedenen Brechungszahlen einstellen zu können. Hierbei hat es sich als besonders effektiv herausgestellt, wenn zumindest der erste, zweite und fünfte Luftabstand unabhängig voneinander einstellbar sind.

Mit dem erfindungsgemäßen Objektiv kann vorteilhafterweise eine besonders geringe Baulänge des Objektivs erreicht werden.

Besonders gute Korrekturen von Abbildungsfehlern können bei Varianten des erfindungsgemäßen Objektivs erreicht werden, bei denen der vierte Luftabstand die Form einer nach hinten gekrümmten meniskusförmigen Luftlinse hat. Der fünfte Luftabstand kann die Form einer bikonkaven Luftlinse haben und der sechste Luftabstand kann die Form einer zum Messobjekt hin gekrümmten meniskusförmigen Luftlinse haben.

Unter "meniskusförmig" soll verstanden werden, dass beide Flächen der betreffenden Linse oder Luftlinse in dieselbe Richtung gekrümmt sind, also entweder zur Probe hin oder von der Probe weg. Mit "nach vorne" wird die Richtung entlang der optischen Achse zur Probe hin bezeichnet, während "nach hinten" die entgegengesetzte Richtung angibt, also entlang der optischen Achse von der Probe weg. Die meniskusförmigen Luftlinsen können auch als positive Luftlinsen bezeichnet werden, wobei sich "positiv" allein auf die Bauform und nicht auf die Brennweite bezieht.

Grundsätzlich können zufriedenstellende Korrekturen von Abbildungsfehlern bereits erreicht werden, wenn von dem vierten, fünften und sechsten Luftabstand ein beliebiger Luftabstand die Form einer nach hinten gekrümmten meniskusförmigen Luftlinse hat, ein anderer Luftabstand die Form einer bikonkaven Luftlinse hat und der übrige Luftabstand die Form einer zum Objekt hin gekrümmten meniskusförmigen Luftlinse hat.

Die hier verwendete Aufzählungsweise der Luftabstände und der Linsen, beispielsweise die Benennung der hintersten Linse des Objektivs als zwölfte Linse, soll nicht dahingehend verstanden werden, dass zwangsläufig eine entsprechende Anzahl an Luftabständen oder Linsen, beispielsweise zwölf Linsen, vorhanden sein müssen. So können die genannten Linsen und Linsengruppen prinzipiell jeweils durch eine Mehrzahl an Linsen oder Linsengruppen ersetzt werden, solange vergleichbare optische Wirkungen erreicht werden. Bevorzugt enthält das erfindungsgemäße Objektiv außer den hier beschriebenen Linsen und Luftabständen keine weiteren Linsen oder Luftabstände.

Zur Korrektur von Abbildungsfehlern sind die optischen Eigenschaften der Luftabstände oder Luftlinsen besonders wichtig. Diese können über einen Wert Q beschrieben werden, der definiert ist durch:

$$Q = |f'| * ((2*n1 - 1) / r1 + 1 / r2)$$

Hierbei sind $r1$ der Krümmungsradius einer vorderen Fläche der Luftlinse und $r2$ der Krümmungsradius einer gegenüberliegenden hinteren Fläche der Luftlinse. Mit $n1$ ist die Brechzahl des Mediums vor der vorderen Fläche der Luftlinse angegeben. Hingegen bestimmt die Brechzahl $n2$ des Medium hinter dem Krümmungsradius $r2$, also hinter der hinteren Fläche, die Brennweite $f'$ der Luftlinse in diesem folgenden Medium.

Bei negativer Brennweite hat der Luftabstand die Form einer positiven Luftlinse. Eine positive Brennweite führt hingegen zu einer negativen Form der Luftlinse. Ist Q negativ, dann ist die Luftlinse umso stärker nach vorne gekrümmt, je betragsmäßig größer Q ist. Umgekehrt ist bei positivem Q die Luftlinse mit zunehmender Größe von Q stärker nach hinten gekrümmt. Diese Definition von Q spielt für die in den Figuren dargestellten Ausführungsbeispiele eine Rolle.

Ein zusätzlicher dritter Luftabstand kann zwischen der zweiten Linsengruppe und der dritten Linsengruppe vorhanden sein.

Bei einer bevorzugten Ausführungsform des erfindungsgemäßen Objektivs sind der dritte, vierte und sechste Luftabstand konstant. Damit wird eine kostengünstige Realisierung der Stelleinrichtung möglich, welche insbesondere ausschließlich zum Verändern des ersten, zweiten und fünften Luftabstands eingerichtet sein kann. Es wurde erkannt, dass bei dem erfindungsgemäßen Objektiv bereits die Veränderung der letztgenannten Luftabstände ausreicht, um für bestimmte Immersionsmedien, insbesondere für Glycerin und Öl, sehr gute Korrekturen von Abbildungsfehlern erreicht werden können.

Insbesondere zur Verwendung mit einer Vielzahl verschiedener Immersionsmedien ist es aber zweckmäßig, dass die Stelleinrichtung auch zum Verändern des dritten, vierten und sechsten Luftabstands eingerichtet ist. Wenn alle Luftabstände des Objektivs mittels der Stelleinrichtung veränderbar sind, können die optischen Eigenschaften des Objektivs passend zum jeweils verwendeten Immersionsmedium angepasst werden. Beispielsweise können als Immersionsmedien Wasser mit einer numerischen Apertur von 1,05, Glycerin mit einer numerischen Apertur von 1,1 und Öl mit einer numerischen Apertur von beispielsweise 1,15 verwendet werden. Bei dieser Ausführung haben der zweite, fünfte und sechste Luftabstand sowie ein hinter der zwölften Linse befindlicher siebter Luftabstand bei einem Wechsel des Immersionsmediums von Wasser zu Glycerin und weiter zu Öl jeweils einen Wendepunkt, das heißt sie müssen jeweils einmal vergrößert und einmal verkleinert werden.

Zum Verstellen der Luftabstände können mehrere Fassungen vorhanden sein, die insbesondere teleskopartig und beweglich zueinander in dem Objektiv montiert sein können. Bevorzugt ist zum Verstellen des ersten Luftabstands eine erste Fassung vorhanden, mit welcher die dritte Linse, die zweite Linsengruppe, die dritte Linsengruppe sowie die zehnte, elfte und zwölfte Linse relativ zueinander festgehalten sind, und die Stelleinrichtung ist zum Verstellen der ersten Fassung relativ zu der ersten Linsengruppe in Richtung der optischen Achse des Objektivs eingerichtet. Prinzipiell ist es zum Verstellen des ersten Luftabstands bereits ausreichend, wenn durch die erste Fassung die dritte Linse relativ zur ersten Linsengruppe beweglich ist. Eine genauere mechanische Führung kann aber erreicht werden, wenn auch die Linsen und Linsengruppen, die sich hinter der dritten Linse befinden, von der ersten Fassung gehalten werden.

Zweckmäßigerweise ist zum Verstellen des zweiten Luftabstands eine zweite Fassung vorhanden, mit welcher mindestens die zweite Linsengruppe und die dritte Linsengruppe relativ zueinander festgehalten sind, und die Stelleinrichtung ist zum Verstellen der zweiten Fassung relativ zu der dritten Linse in Richtung der optischen Achse des Objektivs eingerichtet. Bevorzugt haben die Fassungen eine Zylinder- oder Trichterform, so dass die zweite Fassung innerhalb der ersten Fassung angeordnet sein kann. In diesem Fall kann vorgesehen sein, dass die zweite Fassung bei einem Verstellen der ersten Fassung mitbewegt wird.

Weiterhin kann zum Verstellen des fünften Luftabstands eine dritte Fassung vorhanden sein, mit welcher die elfte und zwölfte Linse relativ zueinander fest gehalten sind, und die Stelleinrichtung kann zum Verstellen der dritten Fassung relativ zu der dritten Linsengruppe in Richtung der optischen Achse des Objektivs eingerichtet sein. Sollen weitere Luftabstände einstellbar sein, kann jeweils eine weitere separat bewegliche Fassung vorhanden sein.

Eine besondere anwenderfreundliche Möglichkeit zur Einstellung der Luftabstände über die Stelleinrichtung wird bereitgestellt, wenn die Stelleinrichtung mindestens einen Korrektionsring aufweist, der von einer Außenseite des Objektivs zugänglich ist und der um die optische Achse des Objektivs drehbar ist. Zum Verschieben der Fassungen entlang der optischen Achse bei Drehung des mindestens einen Korrektionsrings sind in diesem Fall die Fassungen mittels Getriebegliedern mit jeweils einem der Korrektionsringe verbunden. An dem Objektiv können Markierungen oder Rastpunkte vorhanden sein, so dass ein Benutzer eine bestimmte Dreheinstellung für jeden der Korrektionsringe komfortabel vornehmen kann.

Die Getriebeglieder können jeweils ein Gewinde oder ein Kurvengetriebe aufweisen. Bevorzugt sind mechanische Ausführungen, bei denen eine Drehbewegung eines Korrektionsrings in ausschließlich eine lineare Bewegung der zugehörigen Fassung entlang der optischen Achse überführt wird.

Zusätzlich oder alternativ kann die Stelleinrichtung piezoelektrische Aktuatoren aufweisen, wobei zum Verschieben der Fassungen entlang der optischen Achse die Fassungen jeweils mit mindestens einem der piezoelektrischen Aktuatoren verbunden sind. Hierdurch werden besonders raumsparende Ausführungen möglich, die zudem besonders schnelle Verschiebungen der Fassungen erlauben.

Bei einer besonders bevorzugten Variante des erfindungsgemäßen Objektivs sind die zehnte, elfte und zwölfte Linse jeweils eine Einzellinse. Vorteilhafterweise kann durch Einzellinsen auch bei stark beschränkter Baulänge des Objektivs eine vergleichsweise große Anzahl an Luftlinsen bereitgestellt werden, durch die verschiedene Abbildungsfehler effektiv korrigiert werden können. Bei bekannten gattungsgemäßen Objektiven sind hingegen hinter der dritten Linsengruppe nicht drei Einzellinsen vorhanden, sondern beispielsweise zwei Linsengruppen aus jeweils zwei zusammengekitteten Linsen. Da diese Kittglieder mehr Raum als Einzellinsen einnehmen, können beim Stand der Technik in diesem hinteren Teil des Objektivs nur zwei und keine drei separate Linsen angeordnet werden. Demgemäß kann auch nicht die effiziente Korrektur von Abbildungsfehlern gemäß der Erfindung erreicht werden.

Zu den Abbildungsfehlern, die effektiv korrigiert werden, können insbesondere sphärische Aberration, Koma, Farblängsfehler, Farbquerfehler, Astigmatismus, Verzeichnung und/oder Bildfeldwölbung gehören.

Mit Simulationsrechnungen konnte gezeigt werden, dass besonders gute Korrekturen von Abbildungsfehlern für verschiedene Immersionsmedien erreicht werden, wenn die zehnte und die elfte Linse jeweils eine Sammellinse sind und die zwölfte Linse eine Zerstreuungslinse ist. Besonders bevorzugt ist, dass die zehnte Linse eine nach hinten gekrümmte Meniskuslinse ist, dass die elfte Linse eine nach vorne gekrümmte Meniskuslinse ist und dass die zwölfte Linse eine nach vorne gekrümmte Meniskuslinse ist. Prinzipiell können statt Meniskuslinsen aber auch plankonkave, bikonkave, plankonvexe oder bikonvexe Linsen eingesetzt werden.

Um eine hohe numerische Apertur des Objektivs zu erreichen, ist es zweckmäßig, dass die erste Linse eine Fülllinse ist und dass die zweite Linse eine Mutterlinse ist, die direkt an die Fülllinse angrenzt. Die erste Linsengruppe ist bevorzugt ausschließlich aus der ersten und zweiten Linse gebildet, kann aber auch weitere Linsen umfassen.

Bei einer bevorzugten Ausführungsform ist die dritte Linse eine Sammellinse. Insbesondere kann sie eine nach hinten gekrümmte Meniskuslinse sein. Prinzipiell können die in den verschiedenen Ausführungsformen beschriebenen Linsen auch durch Linsengruppen ersetzt werden, die beispielsweise aus verkitteten Linsen bestehen. Für eine kompakte Baulänge des Objektivs ist aber bevorzugt jede der beschriebenen Linsen durch genau eine Linse verwirklicht.

Es ist zweckmäßig, dass die zweite Linsengruppe eine vierte, fünfte und sechste Linse aufweist, welche als Dreifach-Kittglied ausgeführt sind, und/oder dass die dritte Linsengruppe eine siebte, achte und neunte Linse aufweist, welche als Dreifach-Kittglied ausgeführt sind. Dabei haben bevorzugt sowohl die zweite als auch die dritte Linsengruppe jeweils eine sammelnde Wirkung.

Insbesondere um einen Abbildungsmaßstab des Objektivs von 40x zu erreichen, kann vorgesehen sein, dass die zweite Linsengruppe als vierte Linse eine nach vorne gekrümmte konvexkonkave Linse mit negativer Brechkraft, als fünfte Linse eine  bikonvexe Linse mit positiver Brechkraft und als sechste Linse eine nach hinten gekrümmte konvexkonkave Linse mit negativer Brechkraft umfasst.

Die dritte Linsengruppe kann bei dieser Ausführung als siebte Linse eine bikonvexe Linse, als achte Linse eine bikonkave Linse und als neunte Linse eine bikonvexe Linse umfassen.

Hingegen kann bei einer anderen Ausführungsform, insbesondere um einen Abbildungsmaßstab von 63x zu erreichen, die zweite Linsengruppe als vierte Linse eine bikonvexe Linse, als fünfte Linse eine bikonkave Linse und als sechste Linse eine bikonvexe Linse umfassen. Die dritte Linsengruppe kann hier durch eine nach vorne gekrümmte konvexkonkave Linse als siebte Linse, eine bikonvexe Linse als achte Linse und eine nach hinten gekrümmte konvexkonkave Linse als neunte Linse gebildet sein.

Bevorzugt ist das erfindungsgemäße Objektiv auf der optischen Achse in einem Wellenlängenbereich von ca. 436nm bis 700nm beugungsbegrenzt korrigiert. Demnach ist die Definitionshelligkeit größer als 81 % in einer gemeinsamen Fokusebene.

Bei einer vorteilhaften Ausführungsform des erfindungsgemäßen Lichtmikroskops ist ein Motor zum Antreiben der Stelleinrichtung vorhanden. So können die Luftabstände komfortabel und exakt eingestellt werden. Diese Ausführung ist besonders bevorzugt, wenn verschiedene Immersionsmedien genutzt werden sollen, bei deren Übergang Wendepunkte in der Verschiebung der Linsen auftreten. Der Motor kann am oder im Objektiv angebracht sein. Alternativ kann der Motor am Lichtmikroskop, beispielsweise an einem Objektivrevolver, montiert sein, so dass verschiedene Objektive mit nur einem Motor betätigt werden können. Die Luftabstände können insbesondere in einer Weise verstellt werden, wie sie in DE 10 2011 002 818 und in DE 10 2008 026 774 A1 beschrieben ist. Der Inhalt dieser Schriften wird durch Bezugnahme in den Offenbarungsgehalt des vorliegenden Textes übernommen.

Bei einer benutzerfreundlichen Ausführungsvariante des erfindungsgemäßen Lichtmikroskops ist ein elektronischer Speicher vorhanden, in dem anzufahrende Einstellungen für die Stelleinrichtung in Abhängigkeit von verschiedenen Immersionsmedien gespeichert sind. Die in dem elektronischen Speicher gespeicherten Einstellungen können über eine Eingabeeinrichtung von einem Benutzer auswählbar sein. Zudem  können elektronische Steuermittel zum Ansteuern des Motors gemäß einer von dem Benutzer ausgewählten Einstellung vorhanden sein. Die anzufahrenden Einstellungen können experimentell oder mit Simulationsrechnungen bestimmt und in dem elektronischen Speicher hinterlegt sein. Es kann auch vorgesehen sein, dass der Benutzer Einstellungen, die er mit der Stelleinrichtung selbst vorgenommen hat, über die Eingabeeinrichtung in dem elektronischen Speicher abspeichern kann. Zur Auswahl der abgespeicherten Einstellungen kann über die Eingabeeinrichtung entweder direkt ein Immersionsmedium anzugeben sein oder eine Brechzahl und eine Abbezahl eines Immersionsmediums sind anzugeben. Ein besonders flexibler Einsatz wird ermöglicht, wenn die elektronischen Steuermittel dazu eingerichtet sind, aus Einstellungsdaten, die in dem elektronischen Speicher für bestimmte Brechzahlen und Abbezahlen von Immersionsmedien abgespeichert sind, Einstellungen zu Immersionsmedien mit beliebigen Brechzahlen und Abbezahlen zu interpolieren. Dadurch können vorteilhafterweise das Objektiv und das Lichtmikroskop mit prinzipiell beliebigen Immersionsmedien eingesetzt werden.

Weitere Vorteile und Merkmale der Erfindung werden nachstehend mit Bezug auf die beigefügten schematischen Figuren beschrieben. Hierin zeigen:

Fig. 1:     eine Schnittansicht eines ersten Ausführungsbeispiels eines erfindungsgemäßen Objektivs in einer ersten Einstellung;

Fig. 2:     eine Schnittansicht des ersten Ausführungsbeispiels eines erfindungsgemäßen Objektivs in einer zweiten Einstellung;

Fig. 3:     eine Schnittansicht eines zweiten Ausführungsbeispiels eines erfindungsgemäßen Objektivs in einer ersten Einstellung;

Fig. 4:     eine Schnittansicht des zweiten Ausführungsbeispiels eines erfindungsgemäßen Objektivs in einer zweiten Einstellung;

Fig. 5:     eine schematische Ansicht eines weiteren Ausführungsbeispiels eines erfindungsgemäßen Objektivs;

Fig. 6:     einen Graphen der Queraberration in Abhängigkeit vom Sinus des objektseitigen Öffnungswinkels für eine Bildmitte bei Verwendung von Glycerin als Immersionsmittel;

Fig. 7:     einen Graphen der Queraberration in Abhängigkeit vom Sinus des objektseitigen Öffnungswinkels für eine von der Bildmitte beabstandete Bildhöhe bei Verwendung von Glycerin als Immersionsmittel;

Fig. 8:     einen Graphen der Queraberration in Abhängigkeit vom Sinus des objektseitigen Öffnungswinkels für eine Bildmitte bei Verwendung von Öl als Immersionsmittel;

Fig. 9:     einen Graphen der Queraberration in Abhängigkeit vom Sinus des objektseitigen Öffnungswinkels für eine von der Bildmitte beabstandete Bildhöhe bei Verwendung von Öl als Immersionsmittel;

Fig. 10:    einen Graphen, der die Bildhöhe gegen die chromatische Vergrößerungsdifferenz bei Verwendung von Glycerin als Immersionsmittel darstellt,

Fig. 11:    einen Graphen, der die Bildhöhe gegen die chromatische Vergrößerungsdifferenz bei Verwendung von Öl als Immersionsmittel darstellt,

Fig. 12:    einen Graphen, der die Bildhöhe gegen die Verzeichnung bei Verwendung von Glycerin als Immersionsmittel darstellt,

Fig. 13:    einen Graphen, der die Bildhöhe gegen die Verzeichnung bei Verwendung von Öl als Immersionsmittel darstellt,

Fig. 14:    einen Graphen, der die Bildhöhe gegen den Astigmatismus bei Verwendung von Glycerin als Immersionsmittel für Licht verschiedener Wellenlängen darstellt und

Fig. 15:    einen Graphen, der die Bildhöhe gegen den Astigmatismus bei Verwendung von Öl als Immersionsmittel für Licht verschiedener Wellenlängen darstellt.

Äquivalente Komponenten sind in allen Figuren mit denselben Bezugszeichen gekennzeichnet.

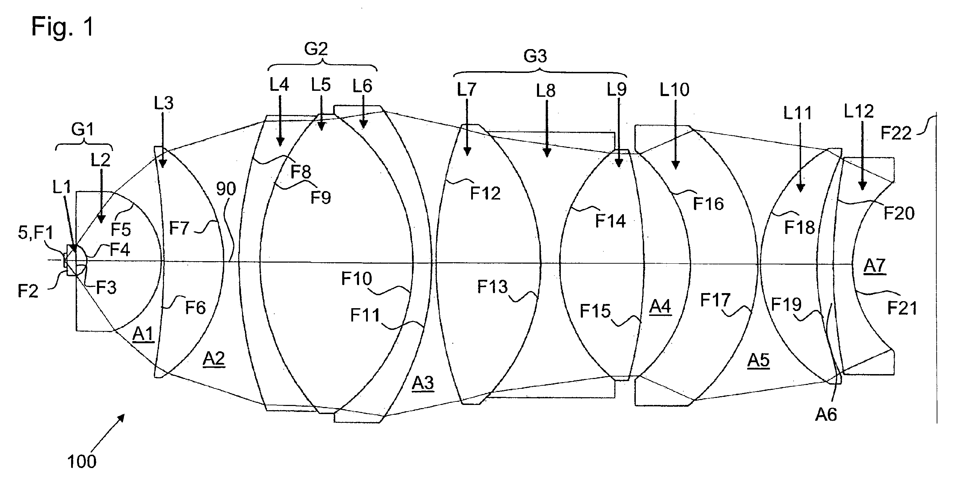

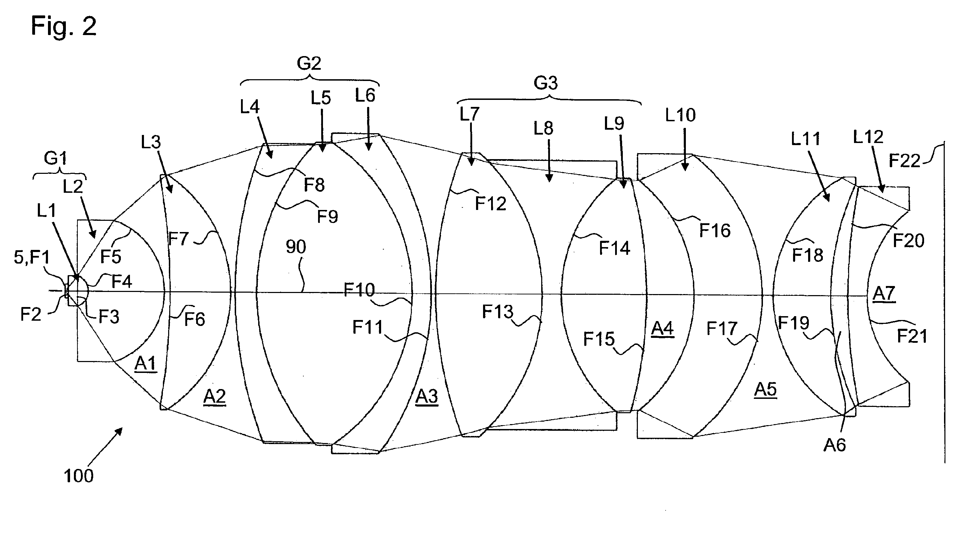

Ein erstes Ausführungsbeispiel eines erfindungsgemäßen Immersionsobjektivs 100 wird mit Bezug auf die Figuren 1 und 2 beschrieben.

Ein erfindungsgemäßes Lichtmikroskop umfasst das erfindungsgemäße Immersionsobjektiv 100.

Als wesentliche Komponenten des Objektivs 100 sind in den Figuren 1 und 2 zwölf Linsen dargestellt, die entlang der optischen Achse 90 des Objektivs 100 angeordnet sind und von einem Probenort aus zu einer gegenüber liegenden Seite des Objektivs 100 mit L1 bis L12 durchnummeriert sind. Zwischen bestimmten Linsen sind Luftabstände A1 bis A7 gebildet, mit welchen verschiedene Abbildungsfehler korrigiert werden.

Das Objektiv 100 aus den Figuren 1 und 2 hat einen Abbildungsmaßstab von -40fach und eine Sehfeldzahl von 20. Die Sehfeldzahl kann definiert sein als Durchmesser des Objektfelds multipliziert mit der Vergrößerung, wobei sie in Millimeter angegeben wird. Zudem ist das Objektiv 100 ein LD Plan-Apochromat-Objektiv. Dabei ist LD die Abkürzung für long distance, was einen langen Arbeitsabstand des Objektivs zur Probe angibt. Mit "plan" wird ausgedrückt, dass das Bildfeld geebnet ist. Apochromat schließlich bedeutet, dass die Fokuslagen von Licht verschiedener Wellenlängen zusammenfallen, nämlich Licht der Spektrallinie "e" mit einer Wellenlänge von 546,07nm, "C" mit 643,85nm, "F" mit 479,99nm und "g" mit 435,83nm. Diese Spektrallinien werden in der Literatur oftmals apostrophiert angegeben, beispielsweise C' anstelle von C. Maßgeblich sollen vorliegend die oben genannten Wellenlängen sein.

Erfindungsgemäß werden bestimmte Linsen oder Linsengruppen verschoben. Hierdurch ändern sich Luftabstände, womit die Luftabstände zur Korrektur von Abbildungsfehlern für ein jeweils verwendetes Immersionsmedium eingestellt werden können. In Figur 1 wird Glycerin als Immersionsmittel benutzt, während in Figur 2 Öl verwendet wird. Um die Abbildungseigenschaften des Objektivs 100 auf das jeweilige Immersionsmittel einzustellen, sind die Luftabstände A1, A2 und A5 unabhängig voneinander veränderlich. In Figur 1 wurde für diese drei Luftabstände eine erste Einstellung vorgenommen, während in Figur 2 eine davon verschiedene zweite Einstellung vorgenommen wurde.

Im Folgenden werden die optischen Komponenten des Objektivs 100 detailliert beschrieben. Auf der optischen Achse 90 befindet sich an einem Probenort ein Messobjekt 5. Bei diesem kann es sich beispielsweise um eine lebende Zelle in einer wässrigen Lösung handeln. An das Messobjekt 5 schließt an einer Fläche F1 ein Deckglas 6 an. Das Deckglas 6 endet mit einer planen Fläche F2, auf welche ein Immersionsmittel 7 zu geben ist, im Fall von Figur 1 also Glycerin und im Fall von Figur 2 Öl.

An das Immersionsmittel 7 grenzt eine erste Linse L1 des Objektivs 100 an. Die erste Linse L1 ist eine positive Fülllinse, das heißt eine Fülllinse mit positiver Brechkraft, die mit einer planen Fläche F3 an das Immersionsmittel 7 angrenzt und mit einer gegenüber liegenden Fläche F4 in direktem Kontakt mit einer zweiten Linse L2 steht, die eine Mutterlinse mit einer negativen Brechkraft ist. Die erste und zweite Linse L1, L2 sind miteinander verkittet und bilden so ein erstes Kittglied oder eine erste Linsengruppe G1.

Die zweite Linse L2 schließt mit einer Fläche F5 ab, auf welche eine dritte Linse L3 folgt. Zwischen der Fläche F5 der zweiten Linse L2 und einer Fläche F6 der dritten Linse L3 ist ein erster Luftabstand A1 freigelassen. Die dritte Linse L3 ist eine Meniskuslinse mit positiver Brechkraft, wobei die Krümmungszentren ihrer beiden Flächen F6 und F7 auf der Seite zu dem Messobjekt 5 hin liegen.

Auf die dritte Linse L3 folgt eine zweite Linsengruppe G2, die aus drei miteinander verkitteten Linsen, nämlich einer vierten Linse L4, einer fünften Linse L5 und einer sechsten Linse L6, besteht. Zwischen der Fläche F7 der dritte Linse L3 und einer Fläche F8 der vierten Linse L4 ist ein zweiter Luftabstand A2 gebildet. Die vierte Linse L4 hat eine negative Brechkraft, wobei die Krümmungszentren ihrer beiden Flächen F8 und F9 auf der dem Messobjekt 5 abgewandten Seite liegen. Die Fläche 9 teilt sich die vierte Linse L4 mit der fünften Linse L5, welche eine bikonvexe Linse mit positiver Brechkraft ist. An eine hintere Fläche F10 der fünften Linse L5 schließt direkt die sechste Linse L6 an, welche eine negative Brechkraft hat und bei der die Krümmungszentren ihrer beiden Flächen F10 und F11 auf der Seite des Messobjekts 5 liegen.

Auf die zweite Linsengruppe G2 folgt eine dritte Linsengruppe G3, wobei zwischen diesen ein dritter Luftabstand A3 freigelassen ist. Die dritte Linsengruppe G3 besteht aus einer siebten Linse L7, einer achten Linse L8 und einer neunten Linse L9, die miteinander verkittet sind. Die siebte Linse L7 ist eine bikonvexe Linse mit positiver Brechkraft und weist die Flächen F12 und F13 auf. Die Fläche F13 teilt sie sich mit der achten Linse L8, die eine bikonkave Form und somit eine negative Brechkraft hat. An die hintere Fläche F14 der achten Linse L8 schließt direkt die neunte Linse L9 an, die eine bikonvexe Form und somit positive Brechkraft hat. Auf eine hintere Fläche F15 der neunten Linse L9 folgt ein vierter Luftabstand A4 zu einer zehnten Linse L10.

Die zehnte Linse L10 ist eine Meniskuslinse mit positiver Brechkraft, wobei die Krümmungszentren ihrer beiden Flächen F16 und F17 auf der Seite des Messobjekts 5 liegen.

Auf die Fläche F17 folgt ein fünfter Luftabstand A5 zu einer elften Linse L11, die ebenfalls eine Meniskuslinse mit positiver Brechkraft ist. Die Krümmungszentren ihrer beiden Flächen F18 und F19 liegen aber auf der Seite des Bildes, also auf der dem Messobjekt 5 abgewandten Seite der Linse.

Hinter der elften Linse L11 befindet sich eine zwölfte Linse L12, wobei zwischen diesen wiederum ein sechster Luftabstand A6 freigelassen ist. Die zwölfte Linse L12 ist eine Meniskuslinse mit negativer Brechkraft, wobei die Krümmungszentren ihrer beiden Flächen F20 und F21 auf der Seite des Bildes liegen.

Das Objektiv kann mit der Fläche F21 der zwölften Linse L12 abschließen oder es kann eine Abschlussblende mit der Fläche F22 vorhanden sein.

Mit dem erfindungsgemäßen Objektiv wird ein sogenanntes Infinite Colour Correction System (ICCS) bereitgestellt. Bei diesem wird das Bild ins Unendliche projiziert und erst eine Tubuslinse erzeugt ein Zwischenbild.

Besonders wichtig sind die drei Luftabstände A4, A5 und A6, deren Formen durch die angrenzenden Linsen bestimmt sind und durch die verschiedenen Abbildungsfehler nicht für ein bestimmtes Immersionsmittel, sondern gleich für unterschiedliche Immersionen effektiv korrigiert werden können. Diese drei Luftabstände dienen als Luftlinsen, wobei der vierte Luftabstand A4 die Form eines zur Bildseite hin gekrümmten Meniskus hat, der fünfte Luftabstand A5 die Form einer bikonkaven Luftlinse hat und der sechste Luftabstand A6 die Form einer zum Messobjekt 5 hin gekrümmten Meniskuslinse hat. Durch diese drei Luftlinsen und durch die drei Einzellinsen L10, L11 und L12 zur Bildung dieser Luftlinsen wird der nötige Bauraum, das heißt die Ausdehnung des Objektivs 100 in Richtung der optischen Achse 90, gering gehalten, wobei dennoch sphärische Aberration, Koma und Farblängsfehler effektiv korrigiert sowie Fehler höherer Ordnung kompensiert werden.

Die optischen Eigenschaften der Luftlinsen A4, A5 und A6 können über den Wert Q, der vorstehend definiert wurde, und die Brennweite f in dem Medium, das auf die jeweilige Luftlinse folgt, angegeben werden. Bei der ersten Ausführungsform nehmen Q und f folgende Werte an:

$$\text{Luftlinse A4:} \quad Q(A4) = -4{,}6 \qquad f(A4) < 0$$
$$\text{Luftlinse A5:} \quad Q(A5) = -1{,}4 \qquad f(A5) > 0$$
$$\text{Luftlinse A6:} \quad Q(A6) = +18{,}7 \qquad f(A6) < 0$$

Die genauen Formen der Linsen L1 bis L12 sowie die daraus resultierenden Größen der Luftabstände A1 bis A7, gemessen auf der optischen Achse 90, sind in der nachstehenden Tabelle 1 angegeben.

Tabelle 1:

| Fläche | Radius | Dicke | $n_e$ | $v_e$ |
|--------|--------|-------|-------|-------|
| F1 | Plan | 0,170 | 1,526 | 54,3 |
| F2 | Plan | 0,525 | Glycerin / Öl | |

(fortgesetzt)

| Fläche | Radius | Dicke | $n_e$ | $v_e$ |
|---|---|---|---|---|
| F3 | Plan | 0,620 | 1,489 | 70,2 |
| F4 | -0,9180 | 4,335 | 1,888 | 40,5 |
| F5 | -4,1570 | A1 | | |
| F6 | -35,5630 | 3,480 | 1,440 | 94,6 |
| F7 | -7,7170 | A2 | | |
| F8 | 22,2250 | 1,230 | 1,641 | 42,2 |
| F9 | 12,0575 | 9,000 | 1,530 | 76,6 |
| F10 | -9,9990 | 1,100 | 1,641 | 42,2 |
| F11 | -14,6420 | 0,250 (A3) | | |
| F12 | 20,9822 | 6,200 | 1,498 | 81,1 |
| F13 | -10,4410 | 1,100 | 1,641 | 42,2 |
| F14 | 8,2920 | 4,900 | 1,440 | 94,6 |
| F15 | -24,2344 | 2,713 (A4) | | |
| F16 | -8,1756 | 3,900 | 1,855 | 23,7 |
| F17 | -9,8580 | A5 | | |
| F18 | 7,6060 | 3,280 | 1,597 | 35,0 |
| F19 | 14,7470 | 0,960 (A6) | | |
| F20 | 31,6240 | 1,100 | 1,725 | 34,5 |
| F21 | 6,1313 | 2,500 (A7) | | |
| F22 | Plan | 126,50 | | |

In der ersten Spalte der Tabelle sind die Flächen F1 und F2 des Deckglases, die Flächen F3 bis F21 der Linsen L1 bis L12 und die abschließende Fläche F22 angeführt. In der nächsten Spalte sind die Krümmungsradien der Flächen in Millimetern angegeben. Dabei kennzeichnet eine negative Zahl, dass der Krümmungs- oder Kreismittelpunkt der jeweiligen Fläche auf der Seite zum Messobjekt 5 hin liegt, während bei einer positive Zahl der Krümmungsmittelpunkt auf der Bildseite liegt, also der dem Messobjekt 5 abgewandten Seite der jeweiligen Fläche. Die nächste Spalte "Dicke" stellt den Abstand zur nächsten Fläche dar, wobei der Abstand in Richtung der optischen Achse 90 bestimmt ist und in Millimetern angegeben ist. Beispielsweise kennzeichnet eine "Dicke" von 9,0 Millimeter für die Fläche F9, dass der Abstand der Fläche F9 zur Fläche F10 gemessen auf der optischen Achse 9,0mm beträgt.

In der nächsten Spalte "$n_e$" ist der Brechungsindex des jeweiligen Mediums für Licht mit einer Wellenlänge der e-Linie von Quecksilber, das heißt 546,07nm, angegeben. Die letzte Spalte "$v_e$" gibt die Abbezahl des jeweiligen Mediums an. Die Abbezahl ist eine Größe für die Dispersion des Mediums und kann über die Brechzahlen für Licht verschiedener Wellenlängen definiert sein als $v_e = (n_e-1) / (n_F-n_C)$, wobei $n_e$ der Brechungsindex bei 546,07nm, $n_F$ der Brechungsindex bei 479,99nm und $n_C$ der Brechungsindex bei 643,85nm ist. Für den Brechungsindex und die Abbezahl wird jeweils das Medium auf der Bildseite der jeweiligen Fläche betrachtet, in der Reihe der Fläche F8 also das Medium zwischen der Fläche F8 und F9 und somit die vierte Linse L4.

An die Fläche F22 schließt bei den dargestellten Ausführungsformen eine Tubuslinse (nicht abgebildet) mit einer Brennweite von 164,5mm an.

Der Brechungsindex und die Abbezahl für das Medium hinter der Fläche F2 hängen vom verwendeten Immersionsmittel ab. Bei dem ersten Ausführungsbeispiel der Figuren 1 und 2, bei dem allein die Luftabstände A1, A2 und A5 verändert werden, sind besonders Glycerin und Öl als Immersionsmittel geeignet. Dabei wird bei dem beschriebenen Ausführungsbeispiel Glycerin mit einer Brechzahl von $n_e = 1,456$ und einer Abbezahl von $v_e = 59,6$ verwendet. Das eingesetzte Öl hat eine Brechzahl von $n_e = 1,518$ und eine Abbezahl von $v_e = 47,1$. Hiermit ergeben sich die unten angegebenen Werte für die numerische Apertur, den Abbildungsmaßstab und die Sehfeldzahl des Objektivs 100.

| Glycerin als Immersionsmedium | Öl als Immersionsmedium |
|---|---|
| Numerische Apertur = 1,15 | Numerische Apertur = 1,2 |
| Abbildungsmaßstab = -39,5 | Abbildungsmaßstab = -40,3 |
| Sehfeldzahl = 20 | Sehfeldzahl = 20 |

Zahlenwerte in Millimetern der Dicken oder Breiten der variablen Luftabstände A1, A2 und A5 sind aus der folgenden Tabelle 2 ersichtlich. Dabei sind geeignete Dicken dieser Luftabstände bei Verwendung von Glycerin als Immersionsmittel, entsprechend der in Figur 1 dargestellten Einstellung, sowie bei Verwendung von Öl als Immersionsmittel, entsprechend der in Figur 2 dargestellten Einstellung, angegeben.

Tabelle 2:

| Luftabstand | Glycerin | Öl |
|---|---|---|
| A1 | 0,150 | 0,337 |
| A2 | 0,897 | 0,250 |
| A5 | 0,150 | 0,609 |

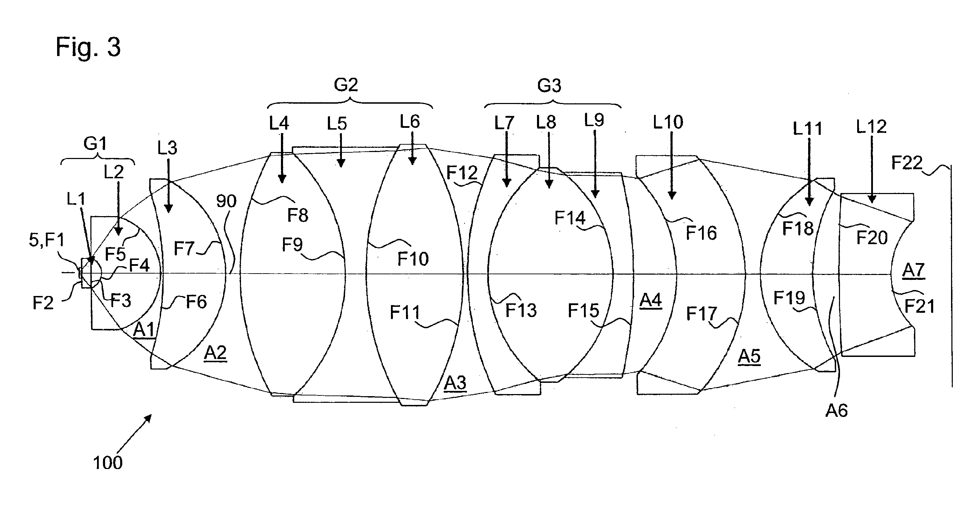

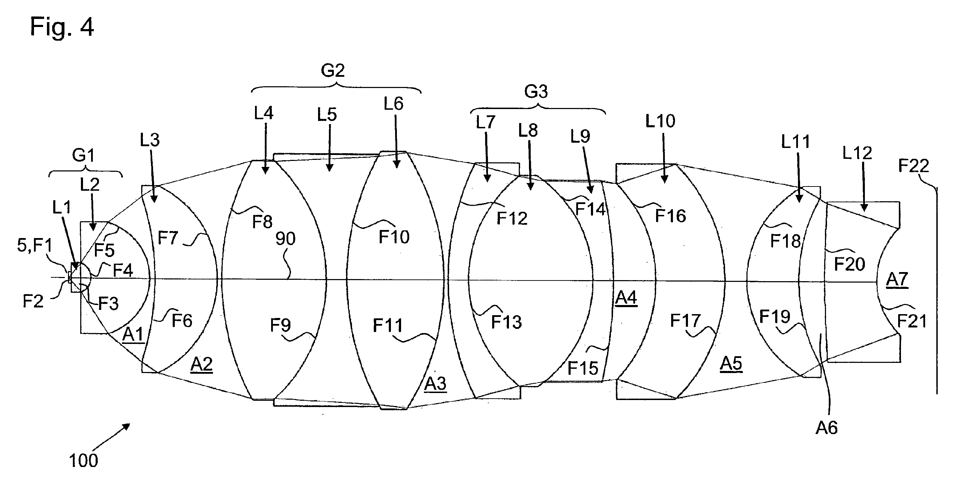

Ein zweites Ausführungsbeispiel eines erfindungsgemäßen Objektivs 100 ist in den Figuren 3 und 4 dargestellt. Dabei ist in Figur 3 eine erste Einstellung dieses Objektivs 100 für eine Verwendung mit Glycerin als Immersionsmittel gezeigt, während Figur 4 eine zweite Einstellung desselben Objektivs 100 für eine Verwendung mit Öl als Immersionsmittel zeigt.

Im Unterschied zu dem vorstehend beschriebenen Ausführungsbeispiel der Figuren 1 und 2 hat dieses Objektiv 100 einen Abbildungsmaßstab von -63fach. Der Aufbau dieses Objektivs 100 unterscheidet sich von demjenigen des zuvor beschriebenen Objektivs im Wesentlichen durch die im Folgenden beschriebenen Unterschiede.

Bei dieser zweiten Ausführungsform ist die zweite Linsengruppe G2 ein Dreifach-Kittglied aus einer vierten Linse L4, einer fünften Linse L5 und einer sechsten Linse L6. Dabei sind die vierte L4 und die sechste Linse L6 Bikonvexlinsen, während die dazwischen liegende fünfte Linse L5 eine Bikonkavlinse ist.

Die dritte Linsengruppe G3 wird durch die siebte Linse L7, die achte Linse L8 und die neunte Linse L9 gebildet. Die siebte Linse L7 hat negative Brechkraft, wobei ihre beiden Flächen zum Messobjekt hin gekrümmt sind. Die achte Linse L8 hat eine bikonvexe Form und demgemäß positive Brechkraft. Die neunte Linse L9 schließlich hat negative Brechkraft, wobei ihre beiden Flächen F14 und F15 zur Bildseite hin gekrümmt sind.

Zudem unterscheidet sich diese zweite Ausführungsform von der ersten Ausführungsform, die mit Bezug auf die Figuren 1 und 2 beschrieben wurde, in den konkreten Zahlenwerten für die Krümmungsradien der jeweiligen Flächen, die Dicken der Linsen L1 bis L12, der Größe der Abstände A1 bis A7 zwischen den Linsen, den Brechzahlen und den Abbezahlen der Linsen. Die Werte hierfür sind in der nachstehenden Tabelle 3 angegeben.

Tabelle 3:

| Fläche | Radius | Dicke | $n_e$ | $v_e$ |
|---|---|---|---|---|
| F1 | Plan | 0,170 | 1,526 | 54,3 |
| F2 | Plan | 0,525 | Glycerin / Öl | |
| F3 | Plan | 0,620 | 1,489 | 70,2 |
| F4 | -0,9118 | 3,400 | 1,888 | 40,5 |
| F5 | -3,3718 | A1 | | |
| F6 | -15,7072 | 3,600 | 1,440 | 94,6 |
| F7 | -6,0499 | A2 | | |
| F8 | 14,4400 | 6,100 | 1,498 | 81,1 |
| F9 | -9,4912 | 1,200 | 1,617 | 44,3 |
| F10 | 14,9730 | 5,700 | 1,498 | 81,1 |
| F11 | -13,9874 | 0,250 (A3) | | |
| F12 | 15,5391 | 1,200 | 1,617 | 44,3 |
| F13 | 7,7864 | 7,300 | 1,440 | 94,6 |
| F14 | -7,4483 | 1,200 | 1,617 | 44,3 |
| F15 | -25,4777 | 2,500 (A4) | | |
| F16 | -8,2694 | 4,000 | 1,855 | 23,7 |
| F17 | -9,7328 | A5 | | |
| F18 | 6,3963 | 3,000 | 1,597 | 35,0 |
| F19 | 10,3492 | 1,500 (A6) | | |
| F20 | 72,7369 | 2,984 | 1,725 | 34,5 |
| F21 | 4,3945 | 1,500 (A7) | | |
| F22 | Plan | 126,50 | | |

Wie zuvor sind auch hier die Luftabstände A1, A2 und A5 variabel, während die übrigen Luftabstände unveränderlich sind. In der folgenden Tabelle 4 sind die Größen der Luftabstände A1, A2 und A5 für die Immersionsmittel Glycerin, also der in Figur 3 dargestellten Einstellung, und Öl, also der in Figur 4 dargestellten Einstellung, in Millimetern angegeben.

Tabelle 4:

| Luftabstand | Glycerin | Öl |
|---|---|---|
| A1 | 0,150 | 0,300 |
| A2 | 0,818 | 0,250 |
| A5 | 0,857 | 1,259 |

Damit sind für die Luftlinsen A4, A5 und A6 die folgenden Zahlenwerte für Q und für die Brennweite f festgelegt:

Luftlinse A4:  $Q(A4) = -5,3$   $f(A4) < 0$

Luftlinse A5:  $Q(A5) = -1,1$   $f(A5) > 0$

Luftlinse A6:  $Q(A6) = +8,3$   $f(A6) < 0$

Die numerische Apertur, der Abbildungsmaßstab und die Sehfeldzahl des Objektivs 100 nehmen dadurch die folgenden Werte an:

Glycerin als Immersionsmedium

Numerische Apertur = 1,15

Abbildungsmaßstab = -62,3

Sehfeldzahl = 20

Öl als Immersionsmedium

Numerische Apertur = 1,2

Abbildungsmaßstab = -63,7

Sehfeldzahl = 20

Verallgemeinernd gelten für die beiden vorstehend beschriebenen Ausführungsformen, die mit Bezug auf die Figuren 1 bis 4 beschrieben wurden, folgende Werte für die Eigenschaften der drei Luftlinsen A4, A5 und A6:

Luftlinse A4:  $-5,3 < Q(A4) < -3,8$   $f(A4) < 0$

Luftlinse A5:  $-1,5 < Q(A5) < -1,1$   $f(A5) > 0$

Luftlinse A6:  $+8,3 < Q(A6) < +20,2$   $f(A6) < 0$

Bei diesen beiden Ausführungsformen können die optischen Eigenschaften des Objektivs 100, also die Korrektur von Abbildungsfehlern, sehr gut für die Immersionsmittel Glycerin und Öl eingestellt werden. Dazu werden allein die Luftabstände A1, A2 und A5 verändert. Dies kann in mechanisch kostengünstiger Weise mittels eines Multi- Immersions- KORR- Objektiv mit Korrektionsringen, durch die über Gewinde die Linsen verschiebbar sind, erfolgen. Zwar können auch für Wasser als Immersionsmittel gute Ergebnisse erzielt werden, hierbei weisen aber die Luftabstände bei Änderungen zwischen den drei Immersionsmitteln Wendepunkte auf, so dass mechanisch aufwändigere Mechanismen zur Verstellung der Luftabstände nötig sind.

Noch weitere Verbesserungen in der Abbildungsqualität sind möglich, wenn zusätzliche Luftabstände variabel einstellbar sind. Bei einer bevorzugten, nicht dargestellten Ausführungsform sind alle Luftabstände A1 bis A7 einstellbar. Insbesondere können hiermit auch zahlreiche Abbildungsfehler korrigiert werden, wenn Wasser als Immersionsmittel eingesetzt wird. Diese Ausführung gleicht der in den Figuren 1 und 2 dargestellten ersten Ausführungsform in Bezug auf die Anzahl an Linsen, ihrer Anordnung zueinander und ihrer qualitativen Form, das heißt in dem Vorzeichen der Krümmungsradien der Flächen F1 bis F22. Die konkreten Zahlenwerte der Krümmungsradien und der Dicken der Linsen unterscheiden sich jedoch und sind der folgenden Tabelle 5 angegeben.

Tabelle 5:

| Fläche | Radius | Dicke | $n_e$ | $v_e$ |
|---|---|---|---|---|
| F1 | Plan | 0,170 | 1,526 | 54,3 |
| F2 | Plan | 0,520 | Wasser / Glycerin / Öl | |
| F3 | Plan | 0,620 | 1,489 | 70,2 |
| F4 | -0,9180 | 4,154 | 1,888 | 40,5 |

(fortgesetzt)

| Fläche | Radius | Dicke | $n_e$ | $v_e$ |
|---|---|---|---|---|
| F5 | -3,9646 | A1 | | |
| F6 | -32,5459 | 4,305 | 1,440 | 94,6 |
| F7 | -8,1620 | A2 | | |
| F8 | 21,7451 | 1,200 | 1,641 | 42,2 |
| F9 | 11,7108 | 8,900 | 1,530 | 76,6 |
| F10 | -10,0278 | 1,200 | 1,641 | 42,2 |
| F11 | -14,3023 | A3 | | |
| F12 | 19,5484 | 5,500 | 1,498 | 81,1 |
| F13 | -10,0183 | 1,200 | 1,641 | 42,2 |
| F14 | 8,1905 | 4,600 | 1,440 | 94,6 |
| F15 | -31,8360 | A4 | | |
| F16 | -8,0989 | 4,000 | 1,855 | 23,7 |
| F17 | -9,7667 | A5 | | |
| F18 | 7,6482 | 3,100 | 1,597 | 35,0 |
| F19 | 14,6433 | A6 | | |
| F20 | 30,0811 | 1,200 | 1,725 | 34,5 |
| F21 | 6,1388 | A7 | | |
| F22 | Plan | 126,50 | | |

Bei dieser Ausführungsform werden die Luftabstände A1 bis A7 jeweils abhängig vom verwendeten Immersionsmittel eingestellt. In der folgenden Tabelle 6 sind die Größen dieser Luftabstände in Millimetern abhängig von den Immersionsmitteln Wasser, Glycerin und Öl angegeben.

Tabelle 6:

| Luftabstand | Wasser | Glycerin | Öl |
|---|---|---|---|
| A1 | 0,122 | 0,184 | 0,368 |
| A2 | 0,354 | 0,633 | 0,060 |
| A3 | 0,250 | 0,953 | 1,036 |
| A4 | 3,313 | 2,677 | 2,600 |
| A5 | 0,595 | 0,200 | 0,574 |
| A6 | 1,000 | 1,056 | 1,054 |
| A7 | 2,257 | 2,188 | 2,198 |

Beim Übergang von Wasser zu Glycerin und weiter zu Öl weisen die Luftabstände A2, A5, A6 und A7 einen Wendepunkt auf. So ist beispielsweise der Abstand A2 bei einem Wechsel von Wasser zu Glycerin zu vergrößern, muss aber bei einem Wechsel von Glycerin zu Öl verringert werden. Um diese Einstellungen komfortabel und mit geringem Zeitaufwand vornehmen zu können, ist bei dieser Ausführung ein Motor zum Verstellen der Luftabstände bevorzugt.

Aus den oben angeführten Zahlenwerten ergeben sich für die Luftlinsen A4, A5 und A6 die folgenden Werte für Q und die Brennweite f:

Luftlinse A4: $Q(A4) = -3,8$ $\quad$ $f(A4) < 0$
Luftlinse A5: $Q(A5) = -1,5$ $\quad$ $f(A5) > 0$
Luftlinse A6: $Q(A6) = +20,2$ $\quad$ $f(A6) < 0$

Die bei dieser dritten Ausführungsform gemachten Angaben für Q und f zu den Luftlinsen A4 bis A6 können mit den Angaben zu Q und f der beiden vorstehend beschriebenen Ausführungsformen verallgemeinernd zusammengefasst werden. Hieraus resultieren die Bereiche für Q und f, die hinter Tabelle 4 und hinter den Angaben zu den Immersionsmedien genannt sind. Durch diese Bereiche wird somit eine einheitliche Eigenschaft der Luftlinsen A4 bis A6 ausgedrückt, die für alle drei beschriebenen Ausführungsformen gültig ist.

Die Brechzahlen und Abbezahlen von Glycerin und Öl entsprechen bei der dritten Ausführungsform den zuvor angegebenen Werten. Das bei diesem Ausführungsbeispiel verwendete Wasser hat eine Brechzahl von $n_e = 1,334$ und

eine Abbezahl von $v_e = 55,9$.

Die numerische Apertur, der Abbildungsmaßstab und die Sehfeldzahl des Objektivs nehmen dadurch abhängig von den verschiedenen Immersionen die folgenden Werte an:

| Immersion: | Wasser | Glycerin | Öl |
|---|---|---|---|
| Numerische Apertur: | 1,05 | 1,10 | 1,15 |
| Abbildungsmaßstab: | -40,3 | -39,7 | -40,4 |
| Sehfeldzahl: | 20 | 20 | 20 |

Abhängig von den Anforderungen an die Korrektur von Abbildungsfehlern können die in den Tabellen 1 bis 6 angegebenen Werte um bis zu 5% vom jeweiligen Wert abweichen. Bevorzugt sind aber Ausführungen, bei denen die Werte um nicht mehr als 2%, besonders bevorzugt um nicht mehr als 0,5%, vom jeweiligen Zahlenwert abweichen.

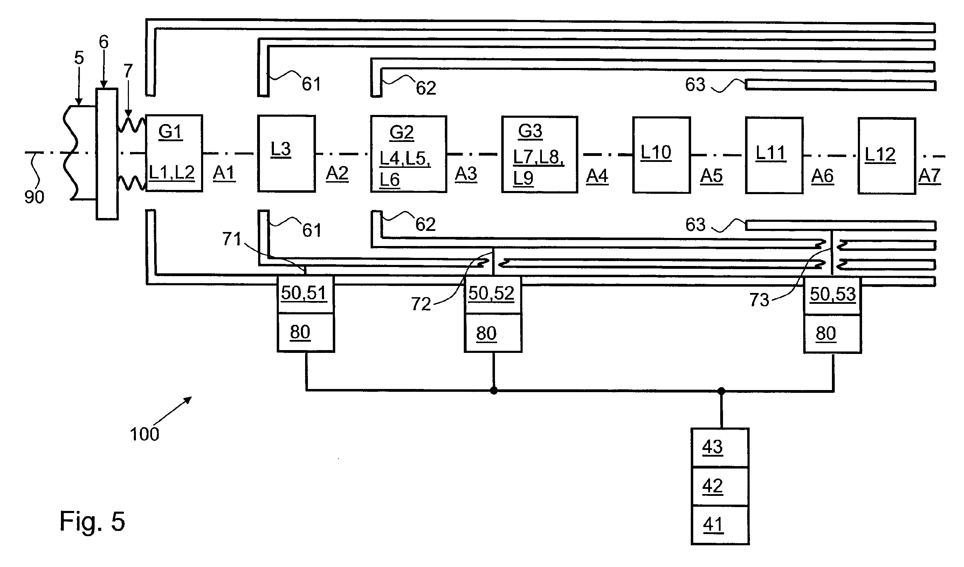

Eine schematische Ansicht eines weiteren Ausführungsbeispiels eines erfindungsgemäßen Immersionsobjektivs 100 ist in Figur 5 gezeigt. Dieses umfasst zwölf Linsen L1 bis L12, welche wie bei einer beliebigen der zuvor beschriebenen Ausführungsformen gebildet sein können.

Die Linsen L1 bis L12 sind wiederum entlang der optischen Achse 90 angeordnet, wobei auch eine Probe 5 dargestellt ist, die zwischen einem Objektträger oder einem Probenbehälter und einem Deckglas 6 angeordnet ist. Zwischen dem Deckglas 6 und der ersten Linse L1 ist ein Immersionsmittel 7 gegeben, bei dem es sich zum Beispiel um Wasser, Glycerin oder Öl handeln kann.

Weiterhin sind in Figur 5 Mittel zum Verstellen bestimmter Luftabstände dargestellt. Hierzu sind mehrere Fassungen 61, 62, 63 vorhanden, in denen jeweils bestimmte Linsen gehalten sind. Durch Verstellen der Fassungen 61, 62, 63 entlang der optischen Achse 90 werden die von den Fassungen gehaltenen Linsen und somit bestimmte Luftabstände verstellt.

Im dargestellten Fall sind drei Fassungen 61, 62, 63 vorhanden, mit denen drei Luftabstände A1, A2 und A5 einstellbar sind. Es können aber auch weitere Fassungen vorhanden sein, um andere Luftabstände, insbesondere alle Luftabstände A1 bis A7, zu verändern.

Durch Verschieben der ersten Fassung 61 wird die dritte Linse L3 relativ zu der im Objektiv 100 ortsfesten Linsengruppe G1 bewegt, womit sich der erste Luftabstand A1 ändert. Vorzugsweise werden, wie auch bei der dargestellten Ausführungsvariante der Fall, bei einem Bewegen der ersten Fassung 61 auch weitere Linsen, die hinter der dritte Linse L3 angeordnet sind, mitbewegt.

Die zweite Fassung 62 ist fest mit der zweiten Linsengruppe G2 und vorzugsweise auch mit weiteren Linsen, die sich hinter der Linsengruppe G2 befinden, verbunden. Insbesondere können auch die dritte Linsengruppe G3 sowie die zehnte, elfte und zwölfte Linse L10, L11, L12 in der zweiten Fassung gehalten sein. Die zweite Fassung 62 ist relativ zu der ersten Fassung 61 und somit relativ zu der dritten Linse L3 beweglich, womit der zweite Luftabstand A2 eingestellt werden kann.

Schließlich ist die dritte Fassung 63 fest mit der elften Linse L11 und der zwölften Linse L12 verbunden und ist relativ zu den übrigen Fassungen 61, 62 beweglich. Hierdurch kann der fünfte Luftabstand A5 eingestellt werden.

Zur Positionsänderung der drei Fassungen 61, 62, 63 ist eine Stelleinrichtung 50 vorhanden. Bei dem dargestellten Ausführungsbeispiel umfasst diese drei Korrektionsringe 51, 52, 53, von denen jeweils einer mit einer der Fassungen 61, 62, 63 über Getriebeglieder 71, 72, 73 verbunden ist. Die Korrektionsringe 51, 52, 53 sind von einer Außenseite des Objektivs 100 für einen Benutzer zugänglich. Dreht der Benutzer einen der Korrektionsringe 51, 52, 53, bewirkt dies über die zugehörigen Getriebeglieder 71, 72 73 eine Linearbewegung der entsprechenden Fassung 61, 62, 63 entlang der optischen Achse 90.

Um einem Benutzer das Einstellen zu vereinfachen, können Einrastpunkte für die Korrektionsringe 51, 52, 53 vorhanden sein. Dabei entsprechen die Einrastpunkte geeigneten Einstellungen für verschiedene Immersionsmittel, wie beispielsweise in den Tabellen 2, 4 und 6 angegeben.

Die Positionen der Fassungen 61, 62, 63 können besonders exakt eingestellt werden, wenn hierzu ein Motor 80 vorhanden ist. Im dargestellten Beispiel können mehrere Motoreinheiten 80 die verschiedenen Korrektionsringe 51, 52, 53 betätigen. Alternativ können die Motoreinheiten 80 auch direkt über die Getriebeglieder 71, 72, 73 mit den Fassungen 61, 62, 63 verbunden sein.

Zur Steuerung des Motors 80 sind elektronische Steuermittel 43 vorhanden. Diese können sich in dem Lichtmikroskop, an dem das Objektiv 100 anzubringen ist, befinden, oder in einem zusätzlichen Gehäuse untergebracht sein. Außerdem ist ein elektronischer Speicher 42 vorhanden, in dem Positionseinstellungen der Fassungen 61, 62, 63 für verschiedene Immersionsmedien gespeichert sind.

Alternativ oder ergänzend kann der Aufbau der Fassungen 61, 62, 63, der Stelleinrichtung 50, insbesondere der Korrektionsringe 51, 52, 53, und/oder des Motors 80 wie in DE 10 2011 002 818 oder in DE 10 2008 026 774 A1 beschrieben erfolgen.

Schließlich ist eine Eingabeeinrichtung 41 vorhanden, die beispielsweise durch eine Tastatur oder einen Touchscreen-Bildschirm gebildet sein kann. Über die Eingabeeinrichtung 41 kann ein Benutzer angeben, welches Immersionsmittel verwendet wird. Gemäß dieser Eingabe laden die elektronischen Steuermittel 43 die zu dem Immersionsmittel in dem elektronischen Speicher 42 hinterlegten Daten und stellen hiermit über den Motor 80 die Positionen der Fassungen 61, 62, 63 ein.

Die Übertragung von Steuerungssignalen zwischen den elektronischen Steuermitteln 43 und dem Motor 80 und/oder die Energieversorgung des Motors 80 können beispielsweise über Kabel, über Funkwellen oder über modulierte Lichtwellen erfolgen.

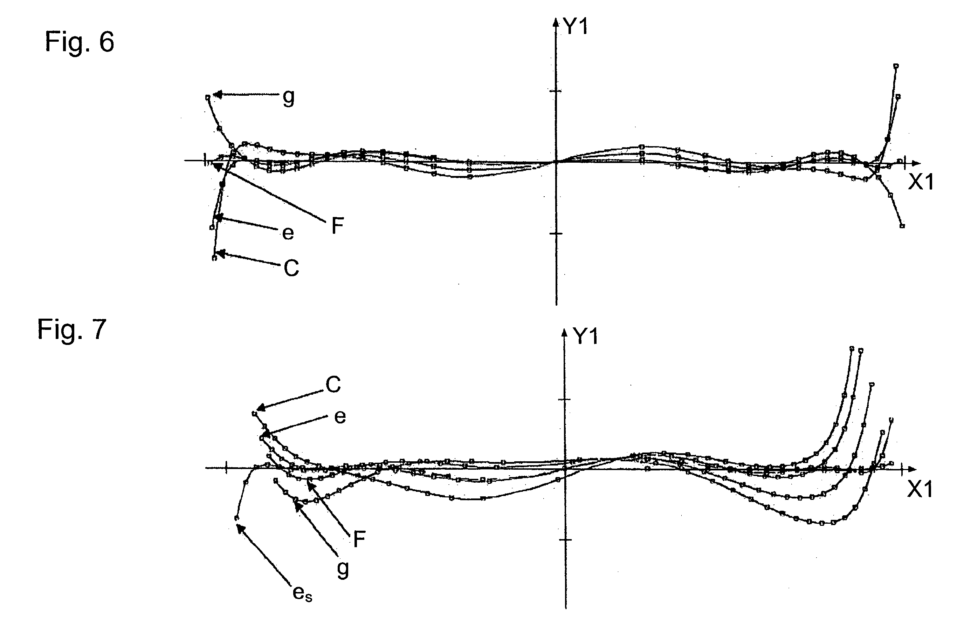

Das verwendete System von Linsen L1 bis L12 und die dazwischen liegenden variablen Luftlinsen sind besonders geeignet, um für verschiedene Immersionsmedien gute Korrekturen von Abbildungsfehlern zu ermöglichen. Graphen mit Größenangaben zur Korrektion verschiedener Abbildungsfehler sind in den Figuren 6 bis 15 angegeben. Diese Angaben basieren auf optischen Abbildungen, die mit den Objektiven gemäß den vorstehend beschriebenen Ausführungsbeispielen erzeugt werden können.

Die Figuren 6 bis 9 zeigen jeweils Graphen der Queraberration in Abhängigkeit vom Sinus des objektseitigen Öffnungswinkels, der auf der Abszisse X1 aufgetragen ist. Es sind die Queraberration für Licht verschiedener Wellenlängen angegeben, wobei "C" für Licht mit 643,85nm Wellenlänge, "F" für 479,99nm, "g" für 435,83nm und "e" für 546,07nm stehen. Mit "$e_s$" ist die Queraberration für Licht mit einer Wellenlänge 546,07nm, welches sich in der Sagittalebene ausbreitet, gekennzeichnet, während sich die übrigen Angaben auf die Meridionalebene beziehen, die senkrecht zur Sagittalebene steht. Auf der Ordinate Y1 gibt ein Teilstrich eine Queraberration von 0,10mm an.

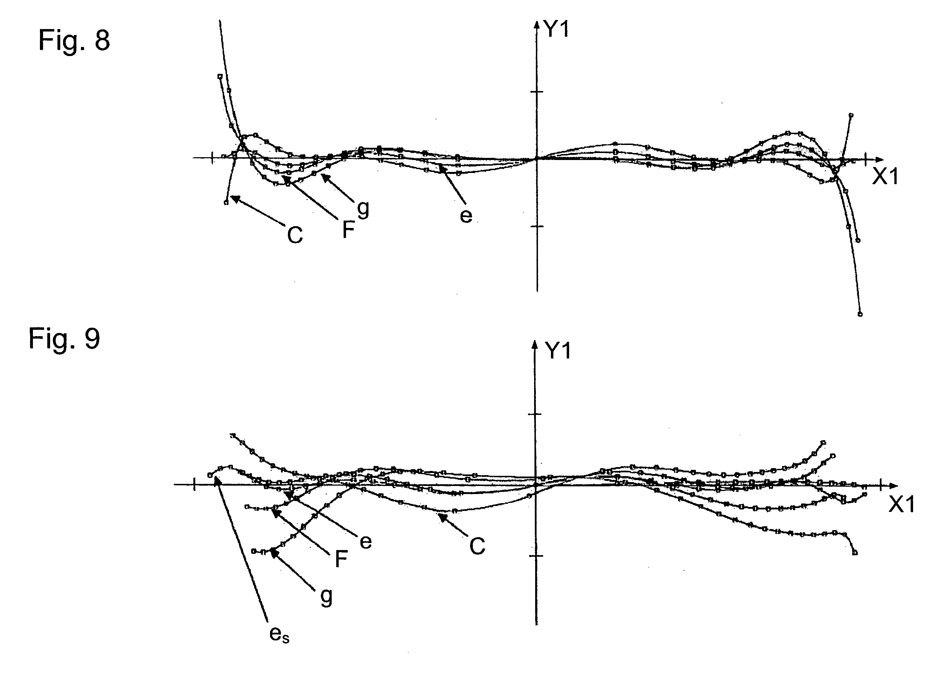

Bei den Figuren 6 und 7 ist als Immersionsmittel Glycerin verwendet, während bei den Figuren 8 und 9 Öl als Immersionsmittel eingesetzt wird.

Die Figuren 6 und 8 beziehen sich auf Strahlengänge zu einer Bildhöhe von null, das heißt, ein Punkt in der Bildmitte auf der optischen Achse wird betrachtet. Bei den Figuren 7 und 9 hingegen ist die Bildhöhe beabstandet von der Bildmitte, hier um 10mm.

Aus den Figuren 6 bis 9 ist erkennbar, dass die Queraberration bis zu sehr großen Abszissenwerten sehr gut auskorrigiert ist. Dies ist für weitestgehend den gesamten sichtbaren Wellenlängenbereich zutreffend. Zudem kann auch bei größeren Bildhöhen eine sehr gute Korrektur erreicht werden.

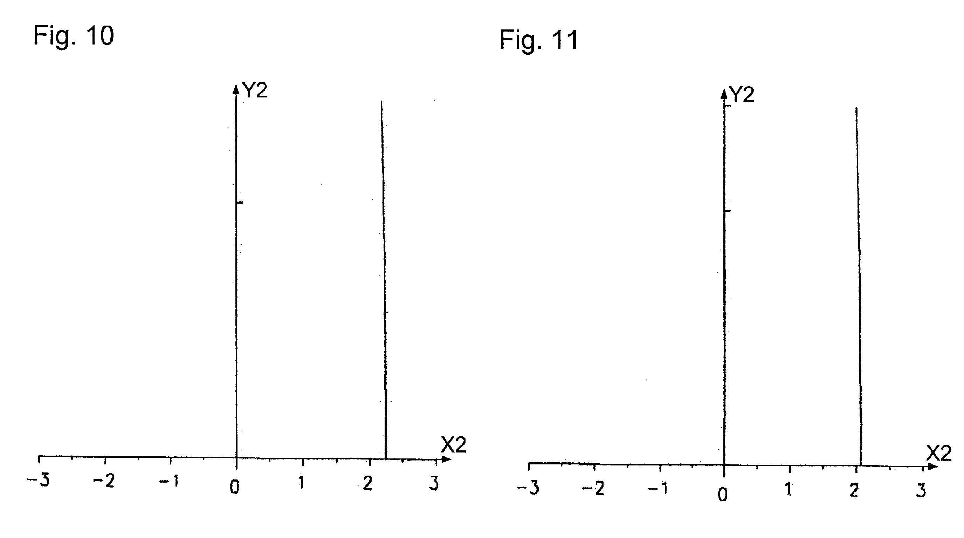

In den Figuren 10 bis 15 sind Graphen zu weiteren Abbildungsfehlern dargestellt.

Dabei entspricht die Ordinate Y2, Y3, Y4 jeweils der betrachteten Bildhöhe. Der Schnittpunkt mit der Abszisse X2, X3, X4 gibt eine Bildhöhe von null an, liegt also auf der optischen Achse.

Auf der Abszisse X2 ist in den Figuren 10 und 11 die chromatische Vergrößerungsdifferenz in Promille angegeben. Die chromatische Vergrößerungsdifferenz resultiert aus der Dispersion und ist definiert als Differenz zwischen den Vergrößerungen für Licht der Spektrallinie "F" mit 479,99nm und der Spektrallinie "C" mit 643,85nm, wobei diese Differenz durch die Vergrößerung bei der Bezugswellenlänge 546,07nm der Spektrallinie "e" geteilt wird. Somit ist vorliegend die Differenz zwischen der Vergrößerung bei Verwendung von grünem Licht und bei Verwendung von rotem Licht gebildet und anschließend durch die Vergrößerung bei grünem Licht geteilt. Während bei Figur 10 Glycerin als Immersion verwendet wurde, wurde bei Figur 11 Öl als Immersion genutzt. Für beide Fälle zeigen die Figuren, dass die relative chromatische Vergrößerungsdifferenz für große Bildhöhen nicht oder kaum zunimmt. Dieser Abbildungsfehler ist also über weitestgehend das gesamte Sehfeld auskorrigiert.

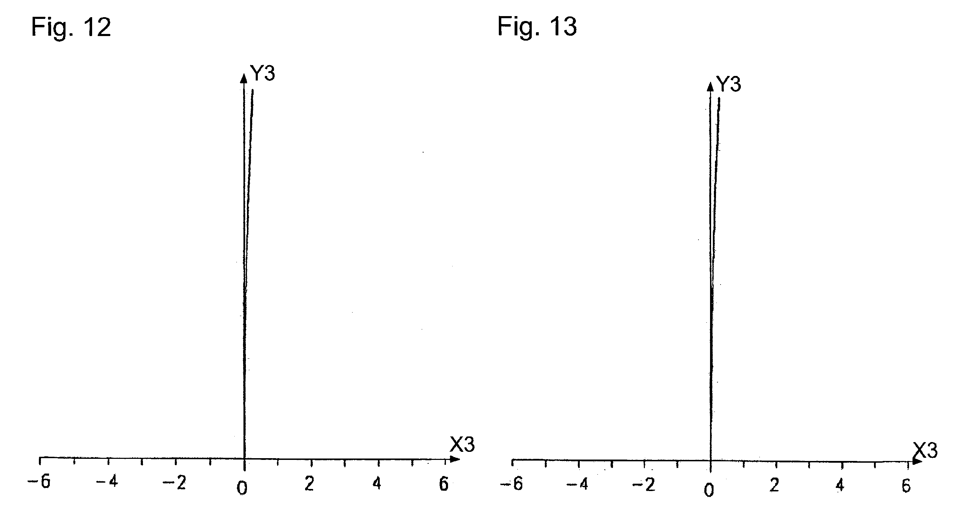

Die Abszisse X3 in den Figuren 12 und 13 gibt die Verzeichnung in Prozent an. Dabei ist wiederum bei Figur 12 Glycerin das Immersionsmittel und bei Figur 13 Öl. Die Figuren geben an, dass die Verzeichnung selbst bei großen Bildhöhen deutlich niedriger als 1 % ist.

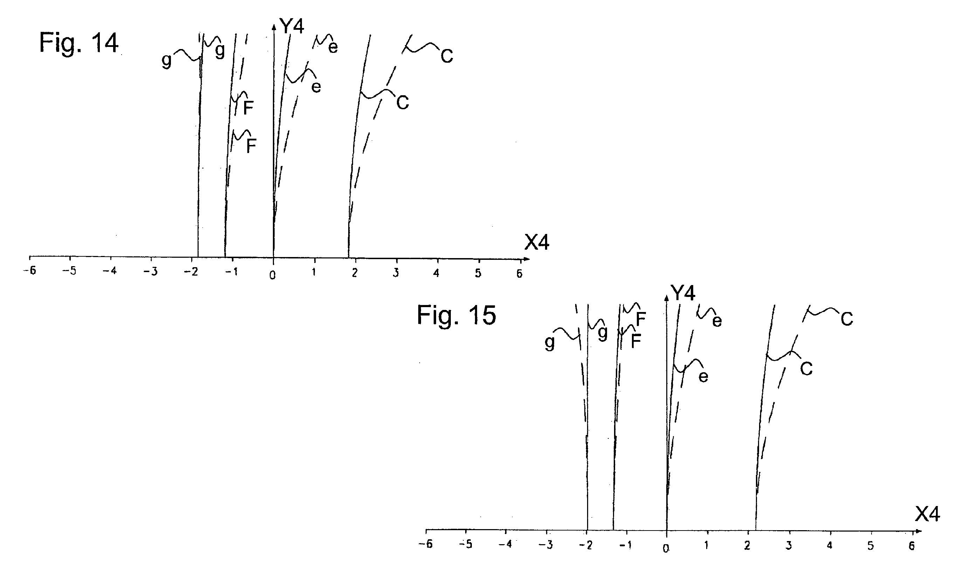

In den Figuren 14 und 15 ist schließlich der Astigmatismus auf der Abszisse X4 in [R.E.], das heißt in Rayleigh-Einheiten, gegen die Bildhöhe Y4 aufgetragen. Dabei ist der Astigmatismus für Lichtstrahlen, die in der Sagittalebene verlaufen, als durchgezogene Linie, und für Lichtstrahlen, die in der Tangential- oder Meridionalebene verlaufen, als gestrichelte Linie angegeben. Der Astigmatismus ist wellenlängenabhängig und für Lichtstrahlen "e" mit 546,07nm Wellenlänge, "C" mit 643,85nm, "F" mit 479,99nm und "g" mit 435,83nm angezeigt. Es ist erkennbar, dass über den sichtbaren Lichtbereich auch bei großen Bildhöhen der Astigmatismus nur schwach ausgeprägt ist.

Somit werden mit dem erfindungsgemäßen Lichtmikroskop und mit dem erfindungsgemäßen Immersionsobjektiv eine Vielzahl von Abbildungsfehlern effektiv korrigiert. Vorteilhafterweise kann dies für verschiedene Immersionsmittel erfolgen, indem bestimmte Luftabstände zwischen den Linsen des Objektivs verändert werden. Gleichzeitig kann die Baulänge des Objektivs gering gehalten werden. Hierfür ist es besonders bedeutsam, dass das hintere Ende des Objektivs mit drei Einzellinsen abschließt.

Bezugszeichenliste:

| 5 | Messobjekt |
|---|---|
| 6 | Deckglas |
| 7 | Immersionsmittel |
| 41 | Eingabeeinrichtung |
| 42 | elektronischer Speicher |
| 43 | elektronische Steuermittel |
| 50 | Stelleinrichtung |
| 51, 52, 53 | Korrektionsringe |
| 61, 62, 63 | erste, zweite, dritte Fassung |
| 71, 72, 73 | Getriebeglieder |
| 80 | Motor |
| 90 | optische Achse |
| 100 | Immersionsobjektiv |
| L1 - L12 | Linsen |
| G1 - G3 | Linsengruppen |
| A1 - A7 | Luftabstände |
| F1 - F22 | Flächen |

**Patentansprüche**

1. Immersionsobjektiv für ein Lichtmikroskop
mit einer ersten Linsengruppe (G1), die an einer zu einem Messobjekt (5) zeigenden Seite des Objektivs angeordnet ist und insbesondere eine erste und eine zweite Linse (L1, L2) umfasst,
mit einer dritten Linse (L3), die hinter der ersten Linsengruppe (G1) angeordnet ist,
wobei ein erster Luftabstand (A1) zwischen der ersten Linsengruppe (G1) und der dritten Linse (L3) gebildet ist,
mit einer zweiten Linsengruppe (G2), die hinter der dritten Linse (L3) angeordnet ist und insbesondere eine vierte, fünfte und sechste Linse (L4, L5, L6) umfasst,
wobei ein zweiter Luftabstand (A2) zwischen der dritten Linse (L3) und der zweiten Linsengruppe (G2) gebildet ist, und
mit einer dritten Linsengruppe (G3), die hinter der zweiten Linsengruppe (G2) angeordnet ist und insbesondere eine siebte, achte und neunte Linse (L7, L8, L9) umfasst,
**dadurch gekennzeichnet,**
**dass** hinter der dritten Linsengruppe (G3) eine zehnte, elfte und zwölfte Linse (L10, L11, L12) vorhanden sind,
**dass** zur Korrektur von Abbildungsfehlern zwischen der dritten Linsengruppe (G3) und der zehnten Linse (L10) ein vierter Luftabstand (A4) gebildet ist, zwischen der zehnten Linse (L10) und der elften Linse (L11) ein fünfter Luftabstand (A5) gebildet ist und zwischen der elften Linse (L11) und der zwölften Linse (L12) ein sechster Luftabstand (A6) gebildet ist und
**dass** zum Anpassen von optischen Eigenschaften des Objektivs an ein Immersionsmedium eine Stelleinrichtung (50) zum Verändern von mindestens dem ersten, zweiten und fünften Luftabstand (A1, A2, A5) vorhanden ist.

2. Objektiv nach Anspruch 1,
**dadurch gekennzeichnet,**
**dass** zur Korrektur von Abbildungsfehlern der vierte Luftabstand (A4) die Form einer nach hinten gekrümmten meniskusförmigen Luftlinse hat,
der fünfte Luftabstand (A5) die Form einer bikonkaven Luftlinse hat und der sechste Luftabstand (A6) die Form einer zum Messobjekt (5) hin gekrümmten meniskusförmigen Luftlinse hat.

3. Objektiv nach Anspruch 1 oder 2,
**dadurch gekennzeichnet,**
**dass** ein dritter, vorzugsweise konstanter, Luftabstand (A3) zwischen der zweiten und dritten Linsengruppe (G2, G3) vorhanden ist und/oder dass der vierte und sechste Luftabstand (A4, A6) konstant sind.

4. Objektiv nach Anspruch 1 oder 2,
**dadurch gekennzeichnet,**
**dass** ein dritter Luftabstand (A3) zwischen der zweiten und dritten Linsengruppe (G2, G3) vorhanden ist und

**dass** die Stelleinrichtung (50) auch zum Verändern des dritten, vierten und sechsten Luftabstands (A3, A4, A6) eingerichtet ist.

5.  Objektiv nach einem der Ansprüche 1 bis 4,
    **dadurch gekennzeichnet,**
    **dass** zum Verstellen des ersten Luftabstands (A1) eine erste Fassung (61) vorhanden ist, mit welcher die dritte Linse (L3), die zweite Linsengruppe (G2), die dritte Linsengruppe (G3) sowie die zehnte, elfte und zwölfte Linse (L10, L11, L12) relativ zueinander fest gehalten sind, und
    **dass** die Stelleinrichtung (50) zum Verstellen der ersten Fassung (61) relativ zu der ersten Linsengruppe (G1) in Richtung der optischen Achse (90) des Objektivs eingerichtet ist.

6.  Objektiv nach einem der Ansprüche 1 bis 5,
    **dadurch gekennzeichnet,**
    **dass** zum Verstellen des zweiten Luftabstands (A2) eine zweite Fassung (62) vorhanden ist, mit welcher mindestens die zweite Linsengruppe (G2) und die dritte Linsengruppe (G3) relativ zueinander fest gehalten sind, und
    **dass** die Stelleinrichtung (50) zum Verstellen der zweiten Fassung (62) relativ zu der dritten Linse (L3) in Richtung der optischen Achse (90) des Objektivs eingerichtet ist.

7.  Objektiv nach einem der Ansprüche 1 bis 6,
    **dadurch gekennzeichnet,**
    **dass** zum Verstellen des fünften Luftabstands (A5) eine dritte Fassung (63) vorhanden ist, mit welcher die elfte und zwölfte Linse (L11, L12) relativ zueinander fest gehalten sind, und
    **dass** die Stelleinrichtung (50) zum Verstellen der dritten Fassung (63) relativ zu der dritten Linsengruppe (G3) in Richtung der optischen Achse (90) des Objektivs eingerichtet ist.

8.  Objektiv nach einem der Ansprüche 4 bis 7,
    **dadurch gekennzeichnet,**
    **dass** die Stelleinrichtung (50) mindestens einen Korrektionsring (51, 52, 53) aufweist, der von einer Außenseite des Objektivs zugänglich ist und der um die optische Achse (90) des Objektivs drehbar ist, und
    **dass** zum Verschieben der Fassungen (61, 62, 63) entlang der optischen Achse (90) bei Drehung des mindestens einen Korrektionsrings (51, 52, 53) die Fassungen (61, 62, 63) mittels Getriebegliedern (71, 72, 73) mit jeweils einem der Korrektionsringe (51, 52, 53) verbunden sind.

9.  Objektiv nach Anspruch 8,
    **dadurch gekennzeichnet,**
    **dass** die Getriebeglieder (71, 72, 73) jeweils ein Gewinde oder ein Kurvengetriebe aufweisen.

10. Objektiv nach einem der Ansprüche 1 bis 9,
    **dadurch gekennzeichnet,**
    **dass** die Stelleinrichtung (50) piezoelektrische Aktuatoren (50) aufweist und
    **dass** zum Verschieben der Fassungen (61, 62, 63) entlang der optischen Achse (90) die Fassungen (61, 62, 63) jeweils mit mindestens einem der piezoelektrischen Aktuatoren (50) verbunden sind.

11. Objektiv nach einem der Ansprüche 1 bis 10,
    **dadurch gekennzeichnet,**
    **dass** die zehnte, elfte und zwölfte Linse (L10, L11, L12) jeweils eine Einzellinse ist.

12. Objektiv nach einem der Ansprüche 1 bis 11,
    **dadurch gekennzeichnet,**
    **dass** die zehnte Linse (L10) eine Sammellinse ist,
    **dass** die elfte Linse (L11) eine Sammellinse ist und
    **dass** die zwölfte Linse (L12) eine Zerstreuungslinse ist.

13. Objektiv nach Anspruch 12,
    **dadurch gekennzeichnet,**
    **dass** die zehnte Linse (L10) eine nach hinten gekrümmte Meniskuslinse ist,
    **dass** die elfte Linse (L11) eine nach vorne gekrümmte Meniskuslinse ist und
    **dass** die zwölfte Linse (L12) eine nach vorne gekrümmte Meniskuslinse ist.

**14.** Objektiv nach einem der Ansprüche 1 bis 13,
**dadurch gekennzeichnet,**
**dass** die erste Linse (L1) eine Fülllinse ist und
**dass** die zweite Linse (L2) eine Mutterlinse ist, die direkt an die Fülllinse (L1) angrenzt.

**15.** Objektiv nach einem der Ansprüche 1 bis 14,
**dadurch gekennzeichnet,**
**dass** die dritte Linse (L3) eine Sammellinse ist.

**16.** Objektiv nach Anspruch 15,
**dadurch gekennzeichnet,**
**dass** die dritte Linse (L3) eine nach hinten gekrümmte Meniskuslinse ist.

**17.** Objektiv nach einem der Ansprüche 1 bis 16,
**dadurch gekennzeichnet,**
**dass** die zweite Linsengruppe (G2) eine vierte, fünfte und sechste Linse (L4, L5, L6) aufweist, welche als Dreifach-Kittglied ausgeführt sind, und/oder dass die dritte Linsengruppe (G3) eine siebte, achte und neunte Linse (L7, L8, L9) aufweist, welche als Dreifach-Kittglied ausgeführt sind.

**18.** Objektiv nach einem der Ansprüche 1 bis 17,
**dadurch gekennzeichnet,**
**dass** die zweite Linsengruppe (G2) eine sammelnde Wirkung hat und dass die dritte Linsengruppe (G3) eine sammelnde Wirkung hat.

**19.** Objektiv nach Anspruch 18,
**dadurch gekennzeichnet,**
**dass** die fünfte Linse (L5) eine Sammellinse, bevorzugt eine bikonvexe Linse, ist, und
**dass** die achte Linse (L8) eine Zerstreuungslinse, bevorzugt eine bikonkave Linse, ist.

**20.** Objektiv nach Anspruch 18,
**dadurch gekennzeichnet,**
**dass** die fünfte Linse (L5) eine Zerstreuungslinse, bevorzugt eine bikonkave Linse, ist, und
**dass** die achte Linse (L8) eine Sammellinse, bevorzugt eine bikonvexe Linse, ist.

**21.** Lichtmikroskop
mit einem Objektiv nach einem der Ansprüche 1 bis 20.

**22.** Lichtmikroskop nach Anspruch 21,
**dadurch gekennzeichnet,**
**dass** ein Motor (80) zum Antreiben der Stelleinrichtung (50) vorhanden ist.

**23.** Lichtmikroskop nach einem der Ansprüche 21 oder 22,
**dadurch gekennzeichnet,**
**dass** ein elektronischer Speicher (42) vorhanden ist, in dem anzufahrende Einstellungen für die Stelleinrichtung (50) in Abhängigkeit von verschiedenen Immersionsmedien gespeichert sind,
**dass** die in dem elektronischen Speicher (42) gespeicherten Einstellungen über eine Eingabeeinrichtung (41) von einem Benutzer auswählbar sind und dass elektronische Steuermittel (43) zum Ansteuern des Motors (80) gemäß einer von dem Benutzer ausgewählten Einstellung vorhanden sind.

Fig. 1

EP 2 650 713 A1

Fig. 2

Fig. 3

Fig. 4

EP 2 650 713 A1

Fig. 5

EP 2 650 713 A1

Fig. 6

Fig. 7

Fig. 8

Fig. 9

Fig. 11

Fig. 10

24

Fig. 12

Fig. 13

EP 2 650 713 A1

EP 2 650 713 A1

Fig. 14

Fig. 15

**Europäisches Patentamt**
**European Patent Office**
**Office européen des brevets**

## EUROPÄISCHER RECHERCHENBERICHT

Nummer der Anmeldung

EP 13 00 1727

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/087745 A1 (FAHLBUSCH INGO [DE] ET AL) 27. April 2006 (2006-04-27) * Absatz [0011]; Abbildungen 1,2,7 * ----- | 1-23 | INV. G02B21/02 G02B21/33 G02B27/00 |
| A | EP 1 548 483 A1 (ZEISS CARL JENA GMBH [DE] ZEISS CARL MICROIMAGING GMBH [DE]) 29. Juni 2005 (2005-06-29) * Anspruch 1 * ----- | 1-23 | |
| A | DE 10 2008 026774 A1 (ZEISS CARL MICROIMAGING GMBH [DE]) 10. Dezember 2009 (2009-12-10) * Ansprüche 1-3,7-9 * ----- | 1-23 | |

RECHERCHIERTE SACHGEBIETE (IPC)

G02B

Der vorliegende Recherchenbericht wurde für alle Patentansprüche erstellt

| Recherchenort | Abschlußdatum der Recherche | Prüfer |
|---|---|---|
| München | 26. Juni 2013 | Daffner, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 00 1727

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2013

| Im Recherchenbericht angeführtes Patentdokument | Datum der Veröffentlichung | Mitglied(er) der Patentfamilie | Datum der Veröffentlichung |
|---|---|---|---|
| US 2006087745 A1 | 27-04-2006 | DE 102004051357 A1<br>US 2006087745 A1 | 27-04-2006<br>27-04-2006 |
| EP 1548483 A1 | 29-06-2005 | AT 557313 T<br>DE 10361912 A1<br>EP 1548483 A1<br>JP 4611013 B2<br>JP 5199312 B2<br>JP 2005189859 A<br>JP 2010211244 A<br>US 2005168843 A1 | 15-05-2012<br>21-07-2005<br>29-06-2005<br>12-01-2011<br>15-05-2013<br>14-07-2005<br>24-09-2010<br>04-08-2005 |
| DE 102008026774 A1 | 10-12-2009 | DE 102008026774 A1<br>US 2011082590 A1<br>WO 2009146868 A2 | 10-12-2009<br>07-04-2011<br>10-12-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008006826 A1
- DE 102006052142 A1
- DE 102011002818
- DE 102008026774 A1